(19) Europäisches Patentamt / European Patent Office / Office européen des brevets

(11) **EP 2 880 377 B1**

(12) **FASCICULE DE BREVET EUROPEEN**

(45) Date de publication et mention de la délivrance du brevet:
**06.06.2018 Bulletin 2018/23**

(21) Numéro de dépôt: **13740310.1**

(22) Date de dépôt: **25.07.2013**

(51) Int Cl.:
*F25B 21/00* (2006.01)   *F28F 3/04* (2006.01)
*B29C 47/00* (2006.01)   B29K 103/04 (2006.01)
*B29K 101/12* (2006.01)

(86) Numéro de dépôt international:
**PCT/EP2013/065743**

(87) Numéro de publication internationale:
**WO 2014/019938 (06.02.2014 Gazette 2014/06)**

(54) **PIÈCE MONOBLOC COMPRENANT UN MATÉRIAU MAGNÉTOCALORIQUE COMPRENANT UN ALLIAGE COMPRENANT DU FER ET DU SILICIUM ET AU MOINS UN LANTHANIDE, ET PROCÉDÉ DE FABRICATION DE LADITE PIÈCE MONOBLOC**

EINTEILIGES ELEMENT MIT EINEM MAGNETOKALORISCHEN MATERIAL MIT EINER LEGIERUNG MIT EISEN UND SILICIUM UND MINDESTENS EINEM LANTHANID SOWIE VERFAHREN ZUR HERSTELLUNG DIESES EINTEILIGEN ELEMENTS

ONE-PIECE PART INCLUDING A MAGNETOCALORIC MATERIAL INCLUDING AN ALLOY INCLUDING IRON AND SILICON AND AT LEAST ONE LANTHANIDE, AND METHOD FOR MANUFACTURING SAID ONE-PIECE PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2012 FR 1257498**

(43) Date de publication de la demande:
**10.06.2015 Bulletin 2015/24**

(73) Titulaire: **Cooltech Applications**
**67810 Holtzheim (FR)**

(72) Inventeurs:
• **MULLER, Christian**
**F-67000 Strasbourg (FR)**
• **VIKNER, Peter**
**F-75015 Paris (FR)**
• **DUBREZ, Alexandra**
**S-752 31 Uppsala (SE)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**EP-A1- 0 552 538     WO-A1-2006/074790**
**WO-A1-2008/099234     WO-A1-2009/024412**
**WO-A1-2009/090442     WO-A1-2012/056585**
**US-A1- 2010 276 627**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Le domaine de l'invention est celui des dispositifs thermiques, et plus précisément des générateurs de froid magnétique.

De manière générale, la production de froid répond à un besoin en constante évolution, et représente aujourd'hui une part importante de la consommation d'électricité mondiale, utilisée notamment pour l'air conditionné et la conservation des aliments et ce alors que l'efficacité des techniques de réfrigération conventionnelles basées sur la compression et la détente d'un gaz demeurent insuffisantes.

Les premiers fluides frigorigènes tels que l'ammoniac, le dioxyde de soufre, le dioxyde de carbone ou le chlorure de méthyle étaient très nocifs pour l'homme et l'environnement. Ils furent remplacés par les chlorofluorocarbures, eux même interdits dans les années 2000 du fait de leur contribution à l'effet de serre et à l'endommagement de la couche d'ozone. Ce problème demeure puisque les hydrochlorofluorocarbures utilisés actuellement continuent, dans de moindres proportions, à avoir les mêmes effets néfastes que les précédents.

Dans ce contexte, il y a donc un double avantage, énergétique et environnemental, à développer de nouvelles techniques de production du froid permettant d'une part, d'éliminer les gaz frigorigènes et d'autre part, d'améliorer le rendement énergétique. On peut notamment citer comme techniques alternatives : la réfrigération thermoacoustique, la réfrigération thermoélectrique ou encore la réfrigération magnétique.

Cette dernière repose sur l'effet magnétocalorique (EMC) de certains matériaux, qui consiste en une variation de leur température lorsqu'ils sont soumis à un champ magnétique. Il suffit ainsi de soumettre ces matériaux à une succession de cycles d'aimantation et de désaimantation et de réaliser un échange thermique avec un fluide caloporteur pour parvenir à une variation de température la plus élargie possible. L'efficacité d'un tel cycle de réfrigération magnétique surpasse d'environ 30 % celle d'un cycle de réfrigération classique.

Cette économie énergétique réalisable avec la réfrigération magnétique la rend particulièrement intéressante pour des applications de climatisation ou de réfrigération domestique ou industrielle.

L'effet magnétocalorique (EMC) est maximum lorsque la température du matériau est proche de sa température de Curie, la température de Curie (Tc) étant la température, à laquelle le matériau perd son aimantation spontanée. Au-dessus de cette température, le matériau est dans un état désordonné dit paramagnétique

Certains matériaux magnétiques tels le gadolinium, l'arsenic ou certains alliages de type MnFe présentent des propriétés magnétocaloriques particulièrement bien adaptées aux applications précitées.

Parmi les alliages, et notamment à base de Si, il est connu selon les températures de Curie recherchées de pouvoir utiliser des alliages à base de LaFeSiCo ou à base de LaFeSi(H). L'insertion d'atomes légers tels que l'hydrogène ou le cobalt, dans les composés LaFeSi, peut être un moyen efficace d'augmenter la température de Curie tout en maintenant l'effet EMC du matériau élevé. De tels matériaux sont particulièrement intéressants en raison de leurs propriétés magnétocaloriques conjuguées à des coûts de fabrication, permettant des applications de masse plus favorables que ceux de matériaux tels que le gadolinium.

De manière générale, pour exploiter les propriétés de tels matériaux magnétocaloriques, la technologie du froid magnétique repose sur l'interaction de ces matériaux avec un liquide caloporteur pouvant être à base d'eau.

Le matériau s'échauffe de manière quasi-instantanée quand il est placé dans un champ magnétique, et il se refroidit suivant une même dynamique thermique quand il est retiré du champ magnétique.

Pendant ces phases magnétiques, le matériau est parcouru par le liquide appelé caloporteur qui va, soit se réchauffer au contact du matériau lors d'une phase dite de magnétisation, soit se refroidir au contact du matériau lors d'une phase dite de démagnétisation.

De manière classique, le liquide caloporteur circule dans des canaux rectilignes ou des pores débouchant existant dans le matériau magnétocalorique, cette circulation correspondant à un flux hydraulique du fluide en mode laminaire, de manière à obtenir une surface d'échange maximale, avec une perte de charge hydraulique minimale.

Ainsi, un cycle comprend :

- une phase de magnétisation (état magnétique = 1) ;
- une phase de démagnétisation (état magnétique = 0)

qui se traduit par une énergie disponible à chaque phase.

Ce cycle est répété jusqu'à des fréquences de plusieurs Hertz. Quand la fréquence augmente, la puissance thermique (par exemple : le refroidissement) délivrée par l'appareil augmente également.

Pour que cette puissance augmente en proportion de l'augmentation de la fréquence, il est nécessaire d'avoir des caractéristiques d'échanges thermiques entre le matériau et le liquide qui permettent d'accroitre ce flux thermique.

La géométrie d'une pièce en matériau magnétocalorique est donc essentielle pour assurer un échange thermique optimal entre ladite pièce et le fluide caloporteur qui circule en contact avec celle-ci.

Il est connu, par exemple du document WO2012/056585 A1, d'utiliser des structures lamellaires de matériau magnétocalorique, permettant la circulation de fluide entre lesdites lames et ainsi d'augmenter les surfaces d'échange avec le fluide caloporteur.

Il est alors nécessaire de calibrer de manière reproductible, constante et très précise les distances entre lesdites lames de matériau, de manière à contrôler au mieux les processus d'échange thermique. Ceci nécessite, l'utilisation d'éléments de positionnement des lames entre elles tout en assurant la maîtrise des paramètres géométriques nécessaire à l'obtention de caractéristiques d'échange thermiques satisfaisantes.

Dans ce contexte, la présente invention propose une structure optimisée de pièce en matériau magnétocalorique et un procédé permettant de réaliser une telle pièce, alors que les techniques classiques actuellement déployées ne permettent pas d'atteindre les rapports de forme nécessaires à l'optimisation des échanges de chaleur, en raison de dimensions trop faibles à atteindre dans des pièces massiques.

Plus précisément l'invention a pour objet une pièce monobloc, à savoir d'un seul tenant, à base d'au moins un matériau magnétocalorique en alliage comprenant du fer, et du silicium et au moins un lanthanide, caractérisée en ce que :

-	ladite pièce comporte une embase située dans un premier plan défini par une première direction Dx et par une seconde direction Dy perpendiculaire à la première direction Dx et un ensemble de N lames unitaires $L_{a,i}$ solidaires de ladite embase ;
-	lesdites lames présentant une première dimension $D_{Lai,x}$ selon la première direction, une seconde dimension $D_{Lai,y}$ selon la seconde direction et une troisième dimension $D_{Lai,z}$ selon une troisième direction Dz perpendiculaire aux première et seconde dimensions ;
-	une ième lame étant sensiblement parallèle à et séparée d'une (i+1)ème lame par une ième distance $d_i$ ;
-	le rapport entre la seconde dimension $D_{Lai,y}$ et la première dimension $D_{Lai,x}$ étant supérieur ou égal à 10 ;
-	le rapport entre la troisième dimension $D_{Lai,z}$ et la première dimension $D_{Lai,x}$ étant supérieur ou égal à 6 ;
-	la première dimension $D_{Lai,x}$ étant du même ordre de grandeur que ladite distance $d_i$ séparant une ième lame, d'une (i+1)ème lame.

Des dimensions particulièrement bien adaptées peuvent être situées dans les gammes suivantes :

$$0,1 \text{ mm} \leq D_{Lai,x} \leq 0,8 \text{ mm ;}$$

$$10 \text{ mm} \leq D_{Lai,y} \leq 100 \text{mm ;}$$

$$5 \text{ mm} \leq D_{Lai,z} \leq 25 \text{mm}$$

et pouvant être de préférence de l'ordre de 12 mm.

Selon une variante de l'invention, la distance entre une ième lame et une (i+1) ème lame est comprise entre environ 0,1 mm et 1 mm.

Avantageusement, la présente invention a aussi pour objet une pièce complexe comprenant deux pièces monobloc selon l'invention, lesdites deux pièces étant encastrées tête-bêche, permettant de réduire l'espace libre entre lames.

Selon une variante de l'invention, les lames comportent des surfaces supérieures convexes.

Selon une variante de l'invention, ladite embase comporte des surfaces creusées entre une ième lame et une (i+1)ème lame.

Avantageusement le profil des creux peut être de type concave, les creux ayant un rayon de courbure optimisé de manière à renforcer la vitesse d'un fluide caloporteur destiné à circuler entre les lames. Typiquement le rayon de courbure peut être de l'ordre de 0,1 mm.

Typiquement le nombre de lames de la pièce monobloc peut être compris entre une dizaine et une trentaine de lames.

Il est à noter qu'il peut être intéressant de fabriquer des dispositifs de génération thermique comprenant des éléments magnétocaloriques fonctionnant à différentes températures de Curie et donc des pièces constituées de matériaux magnétocaloriques différents, ces pièces devant être facilement reconnaissables grâce à la présence d'éléments de marquage.

C'est pourquoi, selon une variante de l'invention, l'ensemble des lames comporte au moins une lame de troisième dimension différente de celle des autres lames permettant de constituer un marquage de ladite pièce monobloc. Le positionnement de la lame $L_{a,i}$ considérée dans l'ensemble des lames $L_{a,1}$, ..., $L_{a,N}$ étant relatif à une température de Curie donnée.

De même un signe distinctif peut également être intégré au niveau de l'embase, plus précisément dans ce cas, ladite embase comporte au moins une surface entre une ième lame et une (i+1) ème lame, creusée différemment des autres surfaces creusées, permettant de constituer un marquage de ladite pièce monobloc.

Avantageusement, dans une configuration à deux blocs emboîtés tête-bêche, une lame de troisième dimension supérieure à celle des autres lames du bloc viendra s'emboîter dans un creusement d'embase de dimensions conformes, ce qui rendra possible un positionnement relatif des deux blocs garantissant des épaisseurs de lames de fluides régulières et conformes aux spécifications. Ces dimensions remarquables peuvent donc remplir une fonction de marquage et de positionnement, ou seulement une de ces fonctions.

De manière à optimiser les configurations d'écoulement de fluide au travers de la pièce monobloc, le rapport entre la dimension, selon la troisième direction, de l'embase $D_{E,z}$ et la dimension, selon la deuxième, direction de l'embase $D_{E,y}$ est compris entre environ 1/5 et 1/30 le rapport entre la dimension, selon la troisième direction, de l'embase $D_{E,z}$ et la troisième dimension $D_{Lai,z}$ est de l'ordre 1/20 ;

-	la première dimension $D_{Lai,x}$ étant préférentiellement sensiblement égale à la dimension, selon la troisième direction, de l'embase $D_{E,z}$.

Selon une variante de l'invention, l'embase étant constituée d'un matériau d'embase, les lames sont constituées d'au moins un matériau magnétocalorique, le matériau d'embase et le matériau magnétocalorique étant différents. Typiquement, l'embase peut être réalisée dans un matériau non magnétocalorique de coût moins élevé que celui d'un matériau magnétocalorique.

Selon une variante de l'invention, la pièce monobloc comprend au moins deux séries de lames constituées d'au moins deux matériaux magnétocaloriques différents. Ainsi en mixant par exemples différents matériaux magnétocaloriques et donc les températures de Curie, on peut adapter finement une pièce et ses caractéristiques thermiques à un cahier des charges précis.

Selon une variante de l'invention, le matériau magnétocalorique est un matériau composite comprenant au moins une poudre d'un premier matériau magnétocalorique et un liant organique.

Afin de réaliser dans toutes ces variantes possibles, une pièce monobloc selon la présente invention, le Demandeur a considéré qu'un procédé d'extrusion ou de co-extrusion était particulièrement bien adapté à l'ensemble des contraintes imposées en terme de dimensionnement pour obtenir d'excellentes performances thermiques et ce en corrélation avec des contraintes de développement industriel de masse.

C'est pourquoi, la présente invention a aussi pour objet un procédé de fabrication de pièce monobloc selon l'invention, caractérisé en ce qu'il comporte les étapes suivantes :

- l'introduction en continu dans au moins un corps d'extrudeuse (Ex) comprenant au moins un fourreau chauffant (Fi), d'au moins une poudre de matériau magnétocalorique ou un mélange d'au moins une poudre magnétocalorique avec un liant organique;
- le mélange, l'homogénéisation et la fusion de ladite poudre de matériau magnétocalorique et, le cas échéant, du liant par au moins une vis d'extrusion (Vi) située dans le ou les corps d'extrudeuse ;
- la mise en forme dudit mélange comprenant ledit matériau magnétocalorique à travers au moins une filière d'extrusion (fil), équipée d'au moins d'une empreinte, permettant de former une pièce monobloc selon l'invention;
- ladite au moins une filière définissant la structure de ladite pièce monobloc.

Selon une variante de l'invention, le procédé comprend en outre une étape de refroidissement progressif dans l'espace, en sortie de ladite au moins une filière, grâce à des moyens dédiés.

Selon une variante de l'invention, les moyens dédiés comprennent un outillage de conformage comprenant au moins un tronçon équipé d'au moins un canal dans lequel peut circuler un fluide de refroidissement/tempérage.

Selon une variante de l'invention, la filière comporte plusieurs tronçons comportant chacun une empreinte, au moins deux tronçons étant séparés par une plaque d'isolation thermique dont l'épaisseur est déterminée pour permettre une différence de température entre les deux tronçons.

Selon une variante de l'invention, le ou les corps d'extrudeuse comprennent chacun deux vis co-rotatives.

Selon une variante de l'invention, le procédé comprend :

- la fabrication en continu d'un ensemble constitué de bandes de matériau magnétocalorique, solidaires d'une embase ;
- une opération de découpe dudit ensemble de manière à définir des pièces élémentaires monobloc.

Selon une variante de l'invention, le procédé comprend l'introduction de différents matériaux au travers de différents moyens d'alimentation répartis le long du ou des corps d'extrudeuse.

Selon plusieurs variantes de l'invention, le procédé peut comprendre l'introduction au travers d'un moyen d'alimentation, d'un liant organique de manière à fabriquer un matériau composite comprenant au moins une poudre de matériau magnétocalorique ou comprendre l'introduction d'un matériau magnétocalorique mélangé au préalable avec un liant. Un deuxième liant peut dans cette deuxième variante être introduit dans l'extrudeuse.

Selon une variante de l'invention, ladite pièce monobloc étant constituée spatialement de différents matériaux selon la seconde direction Dy, le procédé comprend l'introduction de manière séquencée des différents matériaux magnétocaloriques de manière à fabriquer un ensemble de bandes continues présentant des séquences de matériaux magnétocaloriques différents, solidaire d'une embase, et la découpe de pièces monobloc unitaires dans ledit ensemble de bandes.

L'invention sera mieux comprise et d'autres avantages apparaîtront à la lecture de la description qui va suivre donnée à titre non limitatif et grâce aux figures annexées parmi lesquelles :

- la figure 1 illustre un premier exemple d'une première variante de pièce monobloc selon l'invention comprenant une structure en forme de peigne ;
- la figure 2 illustre un second exemple de la première variante de pièce monobloc selon l'invention ;
- la figure 3 illustre un troisième exemple de la première variante de pièce monobloc selon l'invention ;
- la figure 4 illustre un cinquième exemple de la première variante de pièce monobloc selon l'invention ;
- la figure 5 illustre un exemple d'assemblage de deux pièces monobloc de l'invention ;
- les figures 6a, 6b et 6c illustrent une pièce monobloc comprenant des lames structurées pour maintenir un espace déterminé entre lesdites lames grâce à la présence de protubérances, ainsi qu'un assemblage comprenant de telles pièces ;

- les figures 7a, 7b et 7c illustrent une pièce monobloc comprenant des lames structurées pour maintenir un espace déterminé entre lesdites lames grâce à la présence de protubérances et une embase structurée pour permettre un ajustement de pièces monobloc intégrées dans un assemblage ainsi qu'un assemblage ;
- la figure 8 schématise une machine d'extrusion permettant de fabriquer une pièce monobloc de l'invention ;
- la figure 9 illustre un exemple de pièce monobloc obtenue par un procédé d'extrusion avec séquencement d'introduction de matières premières ;
- la figure 10 illustre la chambre d'extrusion en sortie de plusieurs corps d'extrudeuse dans le cas de machine de co-extrusion ;
- la figure 11 illustre un premier exemple de pièce monobloc obtenue par une machine de co-extrusion ;
- la figure 12 illustre un second exemple de pièce monobloc obtenue par une machine de co-extrusion ;
- la figure 13 illustre une vue en élévation d'un tronçon de outillage de conformage comportant un canal de refroidissement utilisé dans un exemple de procédé d'extrusion de l'invention ;
- la figure 14 illustre une vue en élévation d'une plaque d'isolation incorporée entre des tronçons de la filière illustrée en figure 11 ;
- la figure 15 illustre une vue d'une machine d'extrusion utilisée dans un procédé de l'invention ;
- la figure 16 illustre une variante de pièce monobloc en configuration repliée.

De manière générale, la pièce monobloc de la présente invention comprend une structure intégrée au sein de matériau(x) magnétocalorique(s) dans laquelle des régions ajourées sont prévues de manière calibrée et présentant des paramètres géométriques optimisés pour le passage d'un fluide caloporteur.

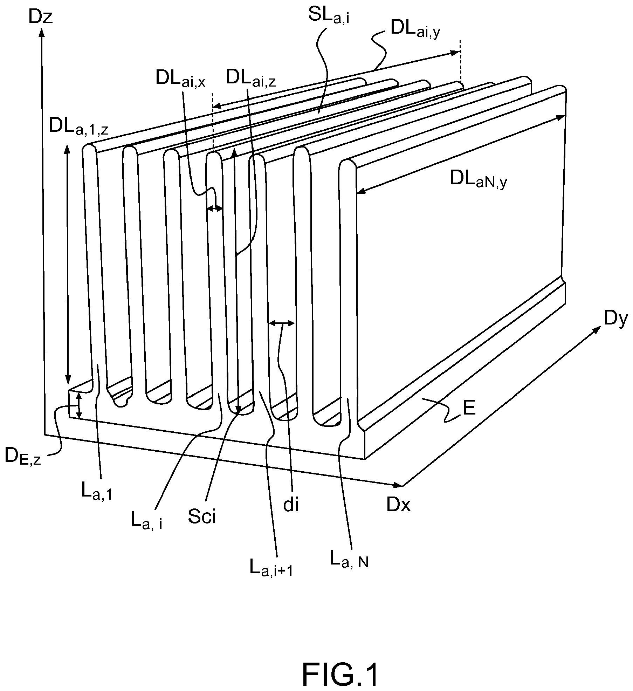

Selon une variante de l'invention, la pièce monobloc peut comprendre une structure en forme de peigne. Un premier exemple de cette variante particulièrement avantageuse, est illustrée en figure 1.

Plus précisément, la pièce monobloc comprend dans cette configuration, une structure en forme de peigne avec une embase E et un ensemble de lames $L_{a,1}$,...., $L_{a,i}$, ...., $L_{a,N}$ solidaires de ladite embase. Les dimensions de ces lames sont selon les directions représentées Dx, Dy et Dz respectivement : $D_{Lai,x}$, $D_{Lai,y}$ et $D_{Lai,z}$.

Deux lames $L_{a,i}$ et $L_{a,i+1}$ sont par ailleurs espacées d'une distance $d_i$ destinée à correspondre à une lame de fluide circulant entre lesdites lames, sauf dans un cas d'assemblage où la distance ne sera pas la même (deux lames de fluide et une lame de matériau).

La pièce monobloc peut être constituée d'un unique matériau magnétocalorique. Il peut s'agir d'un matériau composite à base de poudre de la famille bien connue LaFeSi, par exemple de (LaCe)(FeCoMn)Si où, dans des proportions variables au choix du fabricant, Ce est introduit en substitution de La et Co et/ou Mn en substitution de Fe, dont la composition et la structure métallurgique restent compatibles avec les procédés de mise en oeuvre décrits ci-dessous. Le matériau composite comprenant un liant organique par exemple un polymère, pouvant être du polypropylène, et dans lequel est dispersée une poudre de matériau magnétocalorique pouvant être par exemple du (LaCe)(FeCoMn)SiH où H est introduit en insertion dans le matériau comprenant ainsi des atomes d'hydrogène, comme cela est classiquement connu dans l'état de la technique. Typiquement le taux de charge de poudre en volume peut être de l'ordre de 50 % à 90%.

Pour les applications recherchées de technologie de froid magnétique, dans lesquelles on souhaite optimiser l'interaction entre un liquide caloporteur pouvant être à base d'eau et la pièce de matériau magnétocalorique soumis à des alternances magnétiques, on cherche à contrôler et optimiser les principales caractéristiques suivantes mises en jeu dans les processus d'échange thermique.

Ces principales caractéristiques déterminantes sont répertoriées selon les critères suivants :

critère 1 : le coefficient d'échange thermique : h $(W/m^2.K)$ ;
critère 2 : l'épaisseur de la lame de liquide caloporteur ;
critère 3 : la hauteur de la lame de liquide caloporteur ;
critère 4 : l'épaisseur de la lame de matériau(x) magnétocalorique(s) ;
critère 5 : la hauteur de la lame de matériau(x) magnétocalorique(s) ;
critère 6 : la longueur de la lame de matériau(x) magnétocalorique(s) ;
critère 7 : le nombre de lames de matériau(x) magnétocalorique(s).

Les critères 2 à 7 définissent ainsi la géométrie du bloc de matériau magnétocalorique. Ces critères combinés au critère 1 permettent de définir la capacité d'échange thermique du bloc de matériau magnétocalorique.

Ceci se traduit par une géométrie de bloc de matériau magnétocalorique comportant des rainures de faibles épaisseurs dans lesquelles circule le liquide caloporteur. Ces lames de matériau d'épaisseur réduite délimitent ainsi entre elles des lames de liquide.

Si les lames de matériaux sont trop épaisses, le liquide ne pourra pas extraire suffisamment rapidement l'énergie provenant de l'effet magnétocalorique de la lame avant le cycle suivant (la conductivité thermique du matériau limite le flux de transfert thermique).

Si la lame d'eau n'est pas assez haute, la surface d'échange existante sur les deux faces des lames de matériau magnétocalorique ne suffira pas pour extraire suffisamment de puissance en fonction du coefficient h.

Le coefficient d'échange thermique h dépend fortement de l'épaisseur de la lame d'eau. Il s'accroit quand l'épaisseur de la lame d'eau diminue.

C'est pourquoi typiquement les dimensions des lames et des espaces entre lames peuvent avantageusement être les suivants :

- $0,1 \text{ mm} \leq D_{Lai,x} \leq 0,8 \text{ mm}$;
- $10 \text{ mm} \leq D_{Lai,y} \leq 100 \text{ mm}$ ;
- $5 \text{ mm} \leq D_{Lai,z} \leq 25 \text{ mm}$ et de préférence $D_{Lai,z}$ peut être de l'ordre de 12 mm ;
- $0,1 \leq d_i \leq 1 \text{ mm}$ et de préférence $d_i$ : peut être de l'ordre de 0,2 mm.

Selon l'exemple illustré en figure 1, la pièce monobloc comprend en outre, des surfaces spécifiques entre les lames de manière à optimiser la vitesse de circulation de fluide caloporteur entre lesdites lames et à limiter l'apparition de turbulences dans le fluide caloporteur. Pour ce faire, des surfaces concaves $S_{ci}$ situées entre deux lames adjacentes $D_{Lai}$, $D_{Lai+1}$, au niveau de l'embase E présentant des rayons de courbure adéquats peuvent être prévues. Les surfaces supérieures des lames peuvent également être des surfaces $S_{La,i}$ convexes.

Parmi toutes les lames solidaires de l'embase, il peut être intéressant de réaliser un élément différenciant permettant lors de production de masse de reconnaître par exemple une pièce monobloc d'une autre, en termes de propriétés thermiques en liaison avec le ou les matériaux qui la constituent. Pour cela, il peut être prévu une surface d'embase entre deux lames consécutives plus concave que les autres ou une hauteur de lame supérieure à celle des autres lames. La surface concave entre les lames $L_{a,1}$ et $L_{a,2}$ est plus creusée.

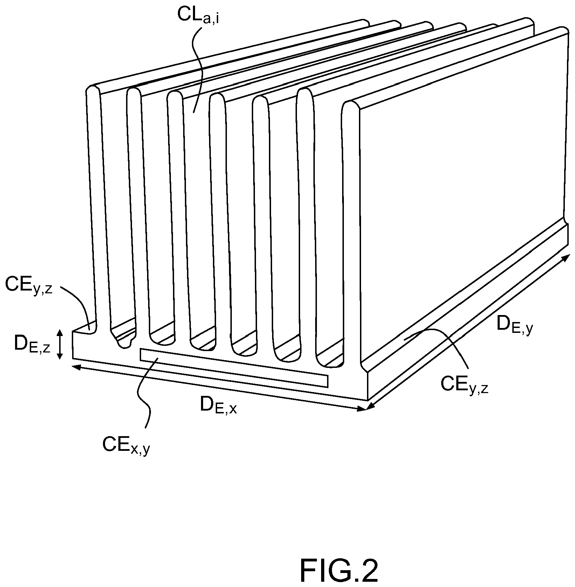

Selon un second exemple de cette variante de l'invention, illustré en figure 2, la pièce monobloc comprend de plus un canal dit d'embase $C_{Ex,y}$ réalisé dans l'embase de manière à augmenter la surface d'échange thermique avec un fluide d'échange thermique. Il est à noter que le décalage ou retrait des lames d'extrémité, soit les lames $L_{a,1}$ et $L_{a,N}$ par rapport au bord de l'embase permettra également de pouvoir constituer des canaux latéraux $C_{Ey,z}$ et ce en complément des canaux définis entre les lames $CL_{a,i}$ lorsque la pièce sera positionnée dans un logement prévu à cet effet dans un module thermique de générateur de froid.

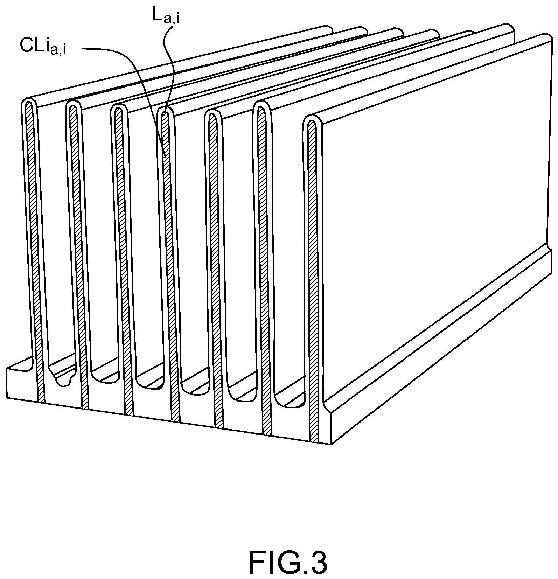

Selon un troisième exemple de cette variante de l'invention, illustré en figure 3, les lames de matériaux magnétocaloriques peuvent comprendre des canaux intégrés $CLi_{a,i}$ dans lesdites lames $L_{a,i}$ et débouchant ou non au niveau de l'embase, la représentation en figure 3, étant relative à une configuration avec canaux débouchants.

Selon un quatrième exemple non illustré de cette variante de l'invention, lesdits canaux intégrés $CLi_{a,i}$ dans lesdites lames $L_{a,i}$ peuvent comprendre un matériau, magnétocalorique ou non, présentant une perméabilité magnétique plus importante que celle du matériau formant lesdites lames $L_{a,i}$. L'intégration d'un tel matériau permet d'augmenter l'intensité de l'induction magnétique lorsque la pièce monobloc est soumise à un champ magnétique.

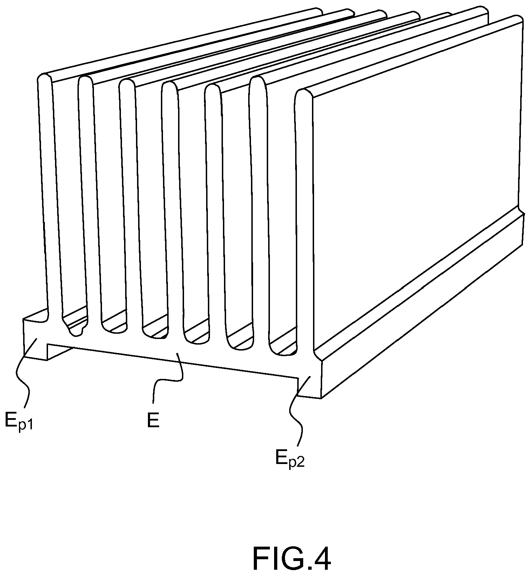

Selon un cinquième exemple de cette variante de l'invention, illustré en figure 4, il peut également être prévu un ou des renfoncements au niveau de l'embase, l'embase E comportant des parties périphériques $E_{p1}$ et $E_{p2}$. La présence de ces parties périphériques $E_{p1}$ et $E_{p2}$ permet également de pouvoir constituer des canaux complémentaires pour le fluide caloporteur lorsque la pièce est positionnée dans un logement prévu à cet effet dans un module thermique de générateur de froid.

Selon une autre variante de l'invention non illustrée, la pièce monobloc peut aussi comprendre un matériau magnétocalorique massif comportant des régions ajourées destinées à l'écoulement d'un fluide caloporteur, lesdites régions étant ajourées selon une seconde direction Dy, perpendiculaire à une première direction Dx et à une troisième dimension Dz.

Les dimensions de ces régions ajourées selon la direction Dx, et $dR_{ai,z}$ selon la direction Dz sont d'un ordre de grandeur inférieur à la dimension $dR_{ai,y}$ selon la seconde dimension.

Les distances entre zones ajourées peuvent typiquement être de l'ordre de quelques dizaines de millimètres.

Dans ce type de configuration, les zones ajourées peuvent être organisées dans une structure type nid d'abeille avec des régions ajourées de forme hexagonale.

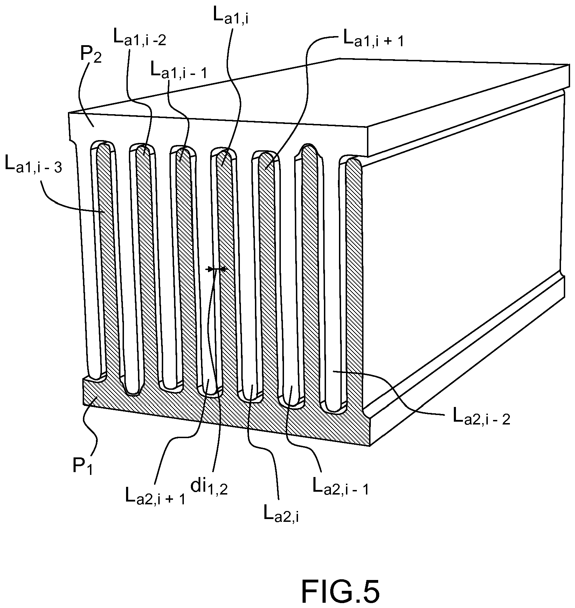

Avantageusement des générateurs thermiques peuvent intégrer des pièces complexes dans lesquelles deux pièces monobloc de l'invention, $P_1$ et $P_2$, sont encastrées tête-bêche comme illustré en figure 5. Cette configuration permet de réduire encore davantage, l'épaisseur des lames de fluide définies par la distance $di_{1,2}$ représentée en figure 4 et ce entre les lames $L_{a1,i}$ et $L_{a2,i}$ ou $L_{a2,i}$ et $L_{a1,i+1}$. On peut ainsi typiquement atteindre des épaisseurs de lames de fluide $di_{1,2}$ même inférieures à 0,1 mm, alors que cela est irréalisable actuellement avec les techniques connues.

Dans ce cas, il est avantageux de prévoir au moins un élément de positionnement, qui peut être aussi un élément de marquage de lames en matériaux de caractéristiques différentes d'un premier bloc, ledit élément de positionnement étant constitué par au moins une lame de troisième dimension supérieure à celle(s) des autres lames positionnée en face d'une surface du deuxième bloc creusée dans l'embase, ledit creusement étant dimensionné pour être complémentaire de l'extrémité de la au moins une lame dudit premier bloc. Une configuration de ce type est illustrée sur la figure par la deuxième lame en partant de la droite et le deuxième creux en partant de la gauche du bloc du bas de la figure 5.

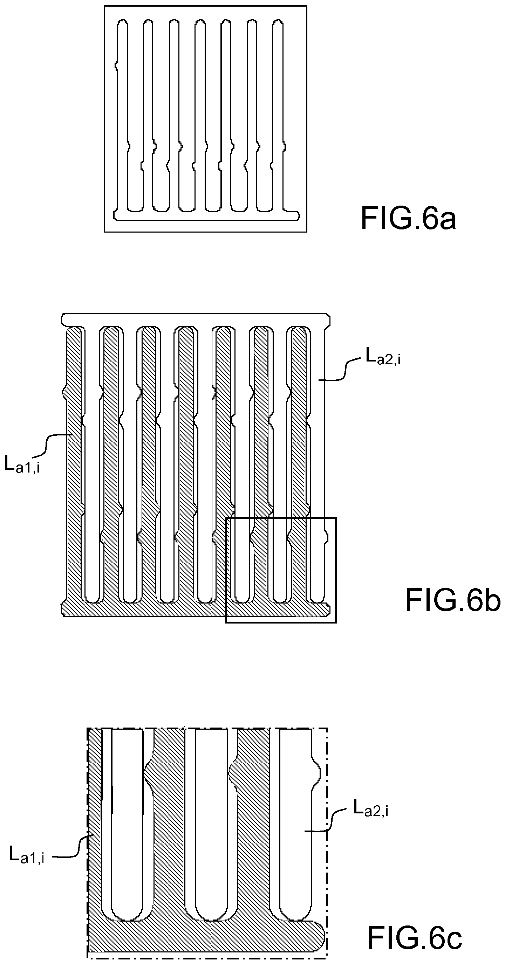

Selon une variante de l'invention, illustrée en figures 6a, 6b et 6c, la pièce monobloc peut avantageusement comprendre des lames présentant des protubérances permettant d'imposer un espacement relativement constant entre les lames et ce en fonctionnement lors de l'écoulement d'un fluide entre lesdites lames La,i, permettant également d'en renforcer la tenue mécanique. Dans la structure complexe, la présence de ces protubérances permet également d'en renforcer la tenue mécanique.

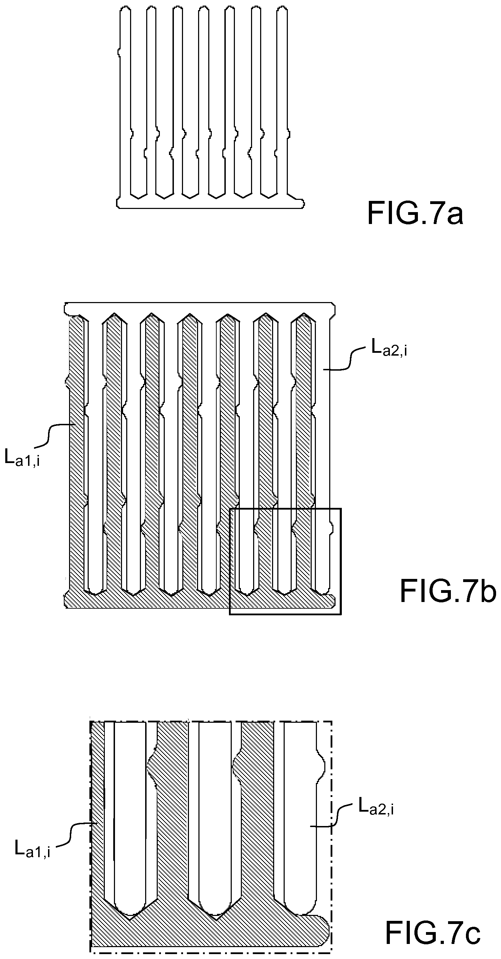

Selon une autre variante de l'invention, illustrée en figures 7a, 7b et 7c, une pièce monobloc comprenant des lames avec protubérances peut de plus venir s'encastrer dans une pièce monobloc présentant quant à elle, des motifs creusés au niveau de l'embase, permettant aux extrémités des lames La,i de la pièce complémentaire de venir se mettre en appui, afin d'assurer une tenue mécanique accrue en fonctionnement.

Selon la présente invention, il est proposé d'utiliser un procédé d'extrusion pour réaliser la géométrie de la pièce monobloc, ce procédé permettant d'atteindre les dimensions requises avec une excellente reproductibilité et un coût de fabrication particulièrement intéressant.

En effet, pour réaliser des pièces présentant de très faibles dimensions entre les lames de matériau magnétocalorique correspondant à de très fines lames de fluide, on est conduit actuellement à réaliser dans un premier temps un bloc massif de matériau magnétocalorique puis à usiner ce bloc dans un second temps. Le bloc peut être réalisé par frittage de poudre à environ 1200°C. On peut tenter de réaliser par électroérosion des canaux, mais le frittage génère des contraintes et des tensions mécaniques dans les blocs. Cela peut conduire à la cassure des blocs ou des lames déjà réalisées. Par ailleurs le diamètre de fil d'électroérosion permettant d'atteindre des dimensions inférieures à quelques dixièmes de millimètres devient un réel problème, car le fil doit présenter un diamètre très faible, ce qui le rend très fragile.

De manière générale, l'extrusion est un procédé de transformation en continu d'une matière malléable homogénéisée et fusionnée par malaxage et échauffement (mécanique et thermique). Dans un fourreau (cylindre), la matière comprimée et malaxée par une ou plusieurs vis, est poussée vers une filière, pour être mise en forme.

Il a déjà été décrit l'utilisation d'un procédé d'extrusion de matériaux magnétocaloriques, dans la demande de brevet WO 2006/074790. Néanmoins ce procédé nécessite la fabrication d'une pâte dont la viscosité est fixée par la nature du mélange lui-même et ajustée par ajout d'eau ou de solvant, Il s'agit d'un procédé de transformation à froid et comprenant une étape de séchage.

Le procédé proposé dans la présente invention est un procédé de mise en forme à chaud, utilisant au moins un fourreau chauffant et ne passant pas par la fabrication d'une pâte susceptible de générer des problèmes d'oxydation des matériaux métalliques employés, en raison de présence d'eau.

Plus précisément, selon la présente invention l'extrudeuse comprend un corps d'extrudeuse équipé d'au moins un fourreau cylindrique chauffant (thermorégulé) à l'intérieur duquel tourne une (ou deux) vis motorisée. Le corps de l'extrudeuse est alimenté à travers des ouvertures dans ledit fourreau par des doseurs ayant des trémies d'alimentation en granulés ou en poudre.

La vis d'extrusion malaxe, compresse, cisaille, échauffe et transporte en continu la matière fluidifiée et homogénéifiée vers la filière. Celle-ci confère à la masse fluidifiée, la forme désirée en poussant la matière au travers de la filière.

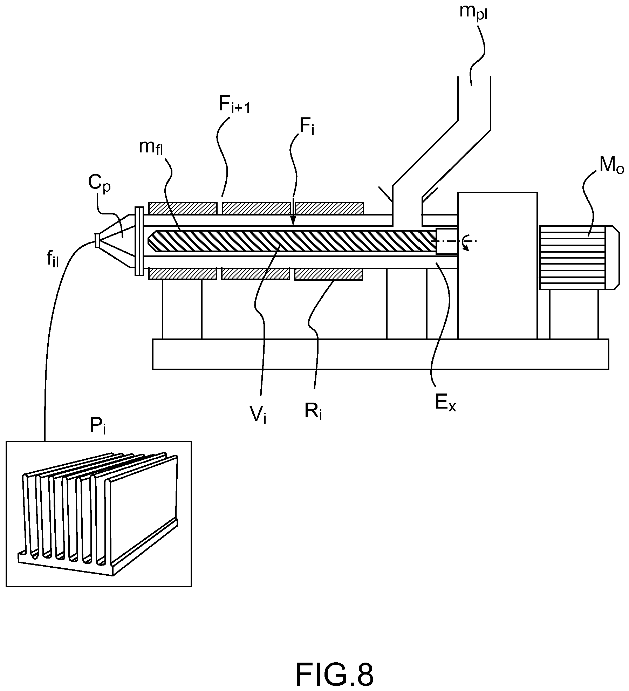

Dans la présente invention, on peut utiliser une machine d'extrusion telle que celle schématisée en figure 8 et notamment pour réaliser des pièces monobloc de matériau composite à base de poudre de matériau magnétocalorique et de liant. Dans le cas d'une poudre de matériau de la famille LaFeSi ou LaCe((FeMnCo)Si)H, le liant peut être par exemple en polypropylène, ou en polycarbonate ou en polyéthylène.

Une telle machine comprend notamment :

- un corps d'extrusion Ex comprenant lui-même un ensemble de modules élémentaires de fourreaux Fi, pilotés par au moins un système de chauffage ;
- le corps d'extrusion qui comprend avantageusement deux vis d'extrusion co-rotatives référencées dans leur ensemble Vi, tournant dans le même sens et permettant par là même d'atteindre des pressions en sortie de l'ordre de 150 bars. Lesdites vis d'extrusion peuvent comporter différents modules de malaxage, décompression, d'accélération, etc. Ainsi les matières premières introduites dans le corps de l'extrudeuse sont transférées d'un module de vis à l'autre qui coopèrent pour augmenter la capacité de mélange, la compression et le transport des matières premières introduites ;

- le cas échéant, une chambre de compression CP qui reçoit la matière $m_{fl}$ fluidifiée et malaxée, et la propulse vers une ou plusieurs filières ;
- une filière $f_{il}$ réplique de la forme de la pièce monobloc de matériau composite à base de poudre de matériau magnétocalorique et de liant $m_{pl}$.

Par exemple, la vis d'extrusion peut avoir une longueur comprise entre 1 et 4 mètres, de préférence 2 mètres , sa longueur peut correspondre à son diamètre multiplié par un coefficient compris entre 10 et 24.

La vitesse de rotation est comprise entre 80 et 400 tr/min, la pression maximale pouvant être de 200 bars environ, sachant qu'il est possible de prévoir une valve-écluse s'ouvrant et évacuant la matière lorsque la pression est trop importante (typiquement supérieure à 200 bars).

La température de la matière peut être comprise entre 150°C (correspondant à la température de la vis d'extrusion et du fourreau) et 240°C. La température de la filière peut, quant à elle, être supérieure de quelques degrés par rapport à la température de la matière afin de diminuer l'adhérence de la matière à la filière.

La vis d'extrusion peut comprendre plusieurs éléments ou modules de vis différents, avec des pas de vis différents et/ou inversés, et également avec des éléments de malaxage (pouvant être empilés sur les axes des vis d'extrusion).

Grâce au procédé de l'invention, il est possible d'alimenter de manière séquencée le corps de l'extrudeuse de manière à former successivement des tronçons de bandes de matériaux différents selon la direction Dy.

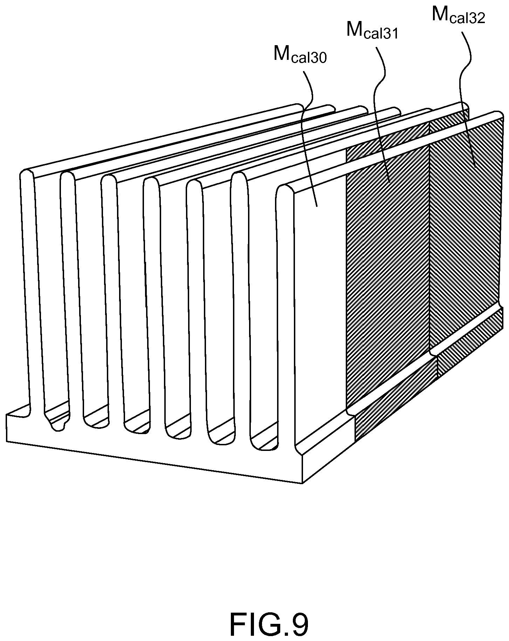

Ainsi selon une autre variante de l'invention illustrée en figure 9, les lames peuvent comporter des régions constituées de matériaux magnétocaloriques différents permettant de disposer d'une latitude supplémentaire en terme de température globale de fonctionnement dépendante des températures de Curie des différents matériaux. Comme représenté, trois régions comprennent respectivement un premier matériau magnétocalorique $M_{cal30}$, un second matériau magnétocalorique $M_{cal31}$, un troisième matériau magnétocalorique $M_{cal32}$. Il peut être avantageux lors de la fabrication de masse de pièces monobloc d'alimenter le corps d'extrudeuse via différentes doseuses d'alimentation réparties le long du corps de l'extrudeuse et selon la séquence suivante puis de procéder à une découpe globale de l'ensemble de pièces unitaires :

-    alimentation via la doseuse en poudre de matériau $M_{cal30}$ ;
-    alimentation via la doseuse en poudre de matériau $M_{cal31}$ ;
-    alimentation via la doseuse en poudre de matériau $M_{cal32}$ ;
-    alimentation via la doseuse en poudre de matériau $M_{cal32}$ ;
-    alimentation via la doseuse en poudre de matériau $M_{cal31}$ :
-    alimentation via la doseuse en poudre de matériau $M_{cal30}$ ;
-    alimentation via la doseuse en poudre de matériau $M_{cal30}$, ..., et suivant, de manière à réaliser des interfaces de grande qualité lors de l'opération de découpe, en raison du fait que la découpe a lieu au sein d'un même matériau et non à l'interface entre deux matériaux différents.

Il est également particulièrement intéressant et adapté d'utiliser un procédé de co-extrusion pour réaliser une pièce monobloc en différents matériaux selon des plans parallèles au plan défini par les directions Dx, Dy.

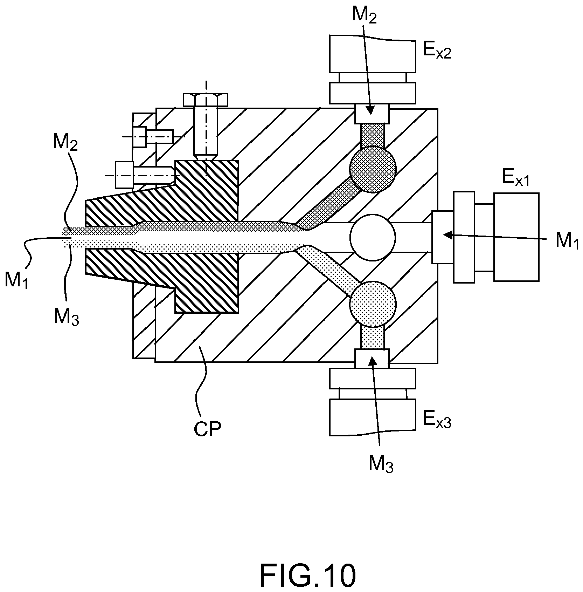

Pour ce faire, on utilise en parallèle, plusieurs corps d'extrudeuse, débouchant dans une unique chambre de compression CP comme le schématise la figure 10, qui montre une chambre de compression alimentée par trois corps d'extrudeuse $Ex_1$, $Ex_2$ et $Ex_3$, alimentés eux-mêmes par différents matériaux $M_1$, $M_2$, $M_3$.

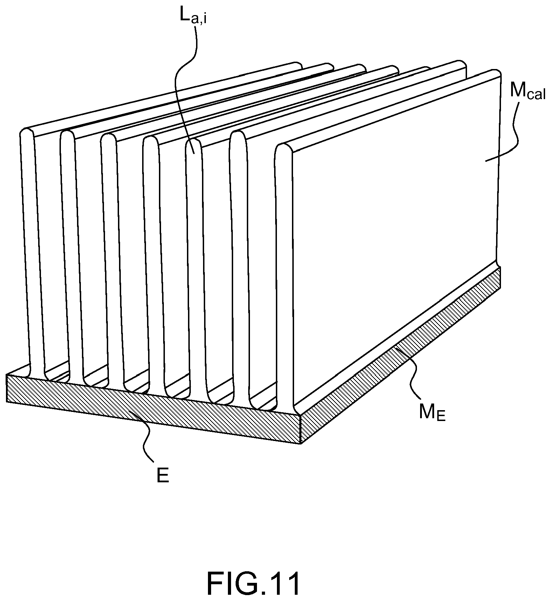

Il est ainsi possible de former notamment, la pièce monobloc illustrée en figure 11 dans laquelle l'embase E est réalisée dans un premier matériau dit d'embase $M_E$, les lames étant réalisées dans un second matériau $M_{cal,}$ ledit second matériau étant un matériau magnétocalorique, alors que le matériau d'embase peut ne pas l'être.

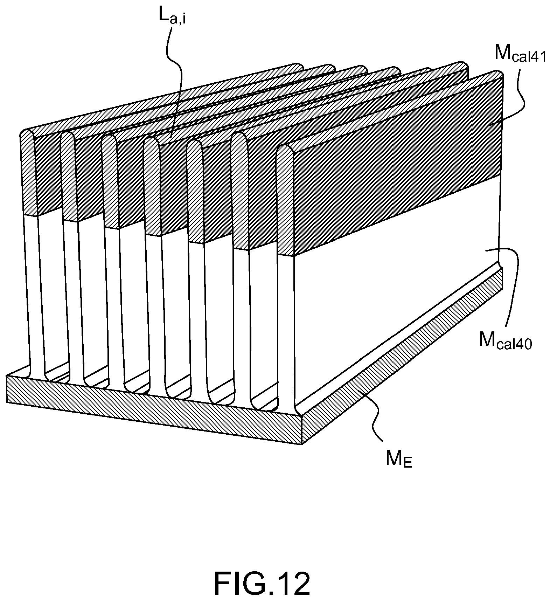

Selon une autre variante illustrée en figure 12, les lames $L_{a,i}$ peuvent être constituées en deux matériaux différents magnétocaloriques $M_{cal40}$ et $M_{cal41}$ répartis selon la direction Dz, l'embase pouvant ou non être constituée dans un troisième matériau dit d'embase $M_E$ pouvant être ou non magnétocalorique.

De manière générale, dans le procédé de fabrication par extrusion ou co-extrusion, il peut être prévu un moyen de refroidissement de ladite pièce monobloc pour assurer un maintien de sa forme après sa sortie de ladite filière $f_{il}$. L'intérêt de ce moyen de refroidissement est d'éviter que la pièce monobloc ne se déforme lorsqu'elle sort de la filière $f_{il}$. Ce refroidissement a pour but d'amener la pièce monobloc en un temps très court d'une température d'environ 200°C à une température proche de la température ambiante. Ce moyen de refroidissement peut être décliné selon plusieurs variantes.

Une première variante non représentée consiste à utiliser des moyens externes de refroidissement et ainsi à refroidir la pièce monobloc en sortie de la filière avec une lame d'air à basse température (environ 5°C par exemple) et à faible vitesse (vitesse adaptée pour ne pas déformer la pièce monobloc).

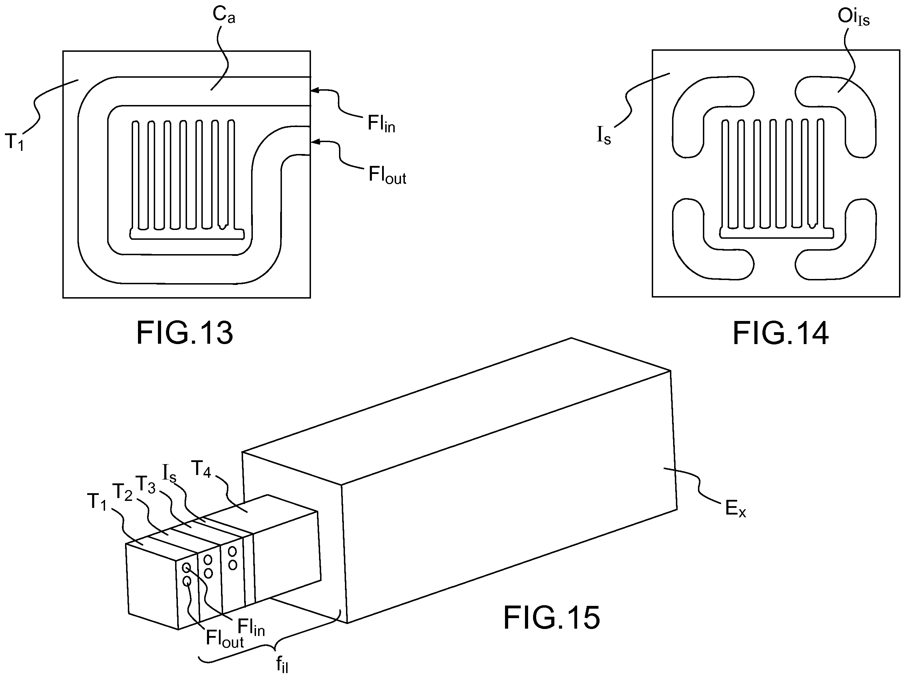

Une seconde variante représentée grâce aux figures 13 à 15 consiste à intégrer le moyen de refroidissement dans la filière $f_{il}$ comportant l'empreinte de la pièce monobloc. On peut à cet effet prévoir une filière $f_{il}$ comportant plusieurs tronçons Ti dont le dernier au moins (situé à la sortie) comporte au moins un canal $C_a$ pour la circulation d'un fluide de refroidissement (liquide ou gazeux), avec une entrée $F_{lin}$ et une sortie $F_{lout}$. La température de ce fluide permet de refroidir la pièce monobloc alors même qu'elle est en train d'être mise en forme dans la filière $f_{il}$. Une pièce $I_s$ d'isolation thermique réalisée par exemple par une plaque en matière synthétique ou composite telle que du PEEK peut être montée entre au moins deux tronçons de la filière $f_{il}$, cette plaque isolante illustré en figure 14 comprend dans une variante des ouvertures $Oi_{ls}$ et une forme ajourée proche de l'empreinte de la pièce.

La figure 15 représente une vue schématique d'une machine d'extrusion dont la filière comporte quatre tronçons $T_1$, $T_2$, $T_3$ et $T_4$. Les tronçons $T_1$, $T_2$ et $T_3$ comportent un canal de refroidissement destiné à la circulation d'un fluide de refroidissement. Le tronçon $T_4$ réalise la forme initiale de la pièce. Les trois tronçons $T_1$, $T_2$ et

$T_3$ sont isolés thermiquement du premier tronçon $T_4$ par une plaque d'isolation $I_s$ présentant des zones creuses ou ouvertures $Oi_{Is}$ (sans matière). Dans une telle configuration, il peut être envisagé ou non de refroidir graduellement la pièce monobloc en faisant circuler des fluides à températures différentes dans les différents tronçons $T_1$, $T_2$, $T_3$. Le fluide circulant dans le tronçon $T_3$ peut présenter la température la plus élevée et celui circulant dans le tronçon $T_1$ peut présenter la température la plus faible. Il est envisageable également d'intégrer d'autres plaques d'isolation, notamment entre les tronçons comportant un canal de refroidissement.

L'invention n'est pas limitée à un tel nombre de tronçons, on peut envisager par exemple l'intégration de deux tronçons : un tronçon comportant un canal de refroidissement et un autre tronçon sans canal de refroidissement.

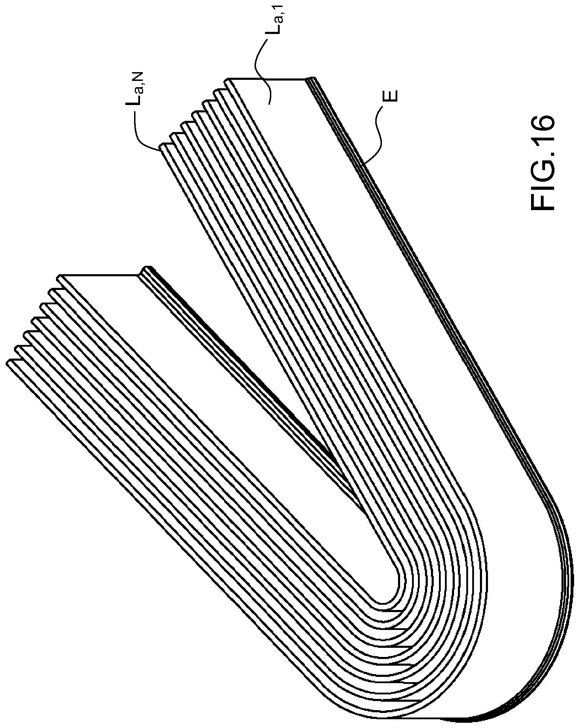

Les pièces monobloc décrites précédemment peuvent avantageusement être intégrées dans un module thermique. Pour cela selon une variante avantageuse, la pièce monobloc peut présenter une géométrie en forme de V, l'ensemble des lames sur leur embase étant courbé selon la seconde direction Dy, comme illustré en figure 16.

**Revendications**

1. Pièce monobloc comprenant au moins un matériau magnétocalorique comprenant un alliage comprenant du fer et du silicium et au moins un lanthanide, et comprenant :

   - ladite pièce comporte une embase (E) située dans un premier plan défini par une première direction (Dx) et par une seconde direction (Dy) et un ensemble de N lames unitaires ($L_{a,i}$) solidaires de ladite embase (E) ;
   - lesdites lames présentant une première dimension ($D_{Lai,x}$) selon la première direction ($D_x$), une seconde dimension ($D_{Lai,y}$) selon la seconde direction ($D_y$) et une troisième dimension ($D_{Lai,z}$) selon une troisième direction ($D_z$) perpendiculaire aux première et seconde dimensions ;
   - une ième lame étant sensiblement parallèle à et séparée d'une (i+1)ème lame par une ième distance ($d_i$) ;
   - le rapport entre la seconde ($D_{Lai,y}$) et la première dimension ($D_{Lai,x}$) étant supérieur ou égal à 10 ;
   - le rapport entre la troisième dimension ($D_{Lai,z}$) et la première dimension ($D_{Lai,x}$) étant supérieur ou égal à 6 ;
   - la première dimension étant du même ordre de grandeur que ladite distance ($d_i$) séparant une ième lame ($L_{a,i}$), d'une (i+1)ème lame ($L_{a,i+1}$).

2. Pièce monobloc selon la revendication 1, **caractérisée en ce que** la première dimension est comprise entre environ 0,1 mm et 0,8 mm (0,1 mm ≤ $D_{Lai,x}$ ≤ 0,8 mm).

3. Pièce monobloc selon l'une des revendications 1 à 2, **caractérisée en ce que** la seconde dimension est comprise entre environ 10 mm et 100 mm (10 mm ≤ $D_{Lai,y}$ ≤ 100mm).

4. Pièce monobloc selon l'une des revendications 1 à 3, **caractérisée en ce que** la troisième dimension est comprise entre environ 6 mm et 25 mm (6 mm ≤ $D_{Lai,z}$ ≤ 25mm) et pouvant être de l'ordre de 12 mm.

5. Pièce monobloc selon l'une des revendications 1 à 4, **caractérisée en ce que** la distance ($d_i$) entre une ième lame et une (i+1)ème lame est comprise entre environ 0,1 mm et 1 mm (0,1 ≤ $d_i$ ≤ 1 mm).

6. Pièce monobloc selon l'une des revendications 1 à 5, **caractérisée en ce que** les lames comportent des surfaces supérieures convexes ($S_{La,i}$).

7. Pièce monobloc selon l'une des revendications 1 à 6, **caractérisée en ce que** ladite embase comporte des surfaces creusées ($S_{Ci}$) entre une ième lame et une (i+1)ème lame.

8. Pièce monobloc selon la revendication 7, **caractérisée en ce que** ladite embase comporte des surfaces concaves entre une ième lame et une (i+1)ème lame.

9. Pièce monobloc selon l'une des revendications 1 à 8, **caractérisée en ce que** l'ensemble des lames comporte au moins une lame de troisième dimension différente de celle des autres lames permettant de constituer un élément de marquage et/ou de positionnement de ladite pièce monobloc.

10. Pièce monobloc selon l'une des revendications 1 à 9, **caractérisée en ce que** ladite embase comporte au moins une surface entre une ième lame et une (i+1)ème lame, creusée différemment des autres surfaces creusées, permettant de constituer un élément de marquage et/ou de positionnement de ladite pièce monobloc.

11. Pièce monobloc selon l'une des revendications 1 à 10, **caractérisée en ce qu'**au moins un sous-ensemble de lames présente au moins une protubérance s'étendant le long de la seconde direction Dy, ladite protubérance étant située entre l'embase et l'extrémité de la lame opposée à ladite embase, de manière à calibrer l'espace entre deux lames adjacentes.

**12.** Pièce monobloc selon l'une des revendications 1 à 11, **caractérisée en ce que** :

- le rapport entre la dimension selon la troisième direction de l'embase ($D_{E,z}$) et la dimension selon la deuxième direction de l'embase ($D_{E,y}$) est compris entre environ 1/5 et 1/30 ;
- le rapport entre la dimension selon la troisième direction de l'embase ($D_{E,z}$) et la troisième dimension ($D_{Lai,z}$) est de l'ordre 1/20 ;
- la première dimension ($D_{Lai,x}$) étant préférentiellement sensiblement égale à la dimension selon la troisième direction de l'embase ($D_{E,z}$).

**13.** Pièce monobloc selon l'une des revendications 1 à 12, **caractérisée en ce que** l'embase étant constituée d'un matériau d'embase, les lames sont constituées d'au moins un matériau magnétocalorique, le matériau d'embase et le matériau magnétocalorique étant différents.

**14.** Pièce monobloc selon l'une des revendications 1 à 13, **caractérisée en ce qu'**elle comprend au moins deux séries de lames constituées d'au moins deux matériaux magnétocaloriques différents.

**15.** Pièce monobloc selon l'une des revendications 1 à 14, **caractérisée en ce qu'**au moins un sous-ensemble de lames comprend des régions réparties selon la seconde direction (Dy) constituées de matériaux magnétocaloriques différents.

**16.** Pièce monobloc selon l'une des revendications 1 à 15, **caractérisée en ce qu'**au moins un sous-ensemble de lames comprend des régions réparties selon la troisième direction (Dz) constituées de matériaux magnétocaloriques différents.

**17.** Pièce monobloc selon l'une des revendications 1 à 16, **caractérisée en ce qu'**elle comporte des lames présentant des canaux intégrés ($CLi_{a,i}$) débouchant ou non au niveau de l'embase.

**18.** Pièce monobloc selon l'une des revendications 1 à 17, **caractérisée en ce que** l'embase comporte au moins un canal ($C_{E\,x,y}$) dans ledit premier plan, dédié au passage d'un fluide.

**19.** Pièce monobloc selon l'une des revendications 1 à 18, **caractérisée en ce que** l'embase comporte des parties périphériques ($E_{p1}, E_{p2}$).

**20.** Pièce monobloc selon l'une des revendications 1 à 19, **caractérisée en ce qu'**au moins la 1$^{ère}$ lame ($L_{a,1}$) ou la Nième lame ($L_{a,N}$), située en périphérie de l'embase est décalée par rapport à l'extrémité de ladite embase, dans ledit premier plan.

**21.** Pièce monobloc selon l'une des revendications 1 à 20, **caractérisée en ce qu'**elle présente une configuration au moins partiellement repliée le long de ladite seconde direction, pouvant être en forme de V.

**22.** Pièce monobloc selon l'une des revendications 1 à 21, **caractérisée en ce que** le matériau magnétocalorique est un matériau composite comprenant au moins une poudre du matériau magnétocalorique Fe/Si/La et un liant organique, le taux de charge volumique en poudre magnétocalorique étant compris en 50% et 90%.

**23.** Pièce monobloc selon la revendication 22, **caractérisée en ce que** le matériau magnétocalorique est de la famille (LaCe)(FeCoMn)H, le liant pouvant être par exemple en polypropylène, ou en polycarbonate ou en polyéthylène

**24.** Pièce complexe comprenant deux pièces monobloc selon l'une des revendications 1 à 23, lesdites deux pièces ($P_1, P_2$) étant encastrées tête-bêche, permettant de réduire l'espace libre entre lames.

**25.** Pièce complexe comprenant deux pièces monobloc selon la revendication 24, **caractérisée en ce que** :

- une première pièce comporte un ensemble des lames comprenant au moins une lame de troisième dimension supérieure à celle des autres lames;
- une seconde pièce comporte une embase comprenant autant de surfaces creusées sur de plus grandes profondeurs que de lames de troisième dimension supérieure à celle des autres lames,
- ladite au moins une lame de troisième dimension supérieure de la première pièce étant de forme complémentaire d'une des surfaces creusées sur une plus grande profondeur de la deuxième pièce.

**26.** Procédé de fabrication de pièce monobloc selon l'une des revendications 1 à 25, **caractérisé en ce qu'**il comporte les étapes suivantes :

- l'introduction en continu dans au moins un corps d'extrudeuse (Ex) comprenant au moins un fourreau chauffant (Fi), d'au moins une poudre de matériau magnétocalorique ou un mélange d'au moins une poudre magnétocalorique avec un liant organique;
- le mélange, l'homogénéisation et la fusion de ladite poudre de matériau magnétocalorique et, le cas échéant, du liant par au moins une vis d'extrusion (Vi) située dans le ou les corps d'extrudeuse ;
- la mise en forme dudit mélange comprenant ledit matériau magnétocalorique à travers au moins une filière d'extrusion (fil), équipée d'au moins d'une empreinte, permettant de former une pièce monobloc selon l'une des revendications 1 à 21 ;
- ladite au moins une filière définissant la structure de ladite pièce monobloc.

27. Procédé de fabrication de pièce monobloc selon la revendication 26, **caractérisé en ce qu'**il comprend en outre une étape de refroidissement progressif dans l'espace, en sortie de ladite au moins une filière, grâce à des moyens dédiés.

28. Procédé de fabrication de pièce monobloc selon la revendication 27, **caractérisé en ce que** les moyens dédiés comprennent une filière comprenant au moins un tronçon équipé d'au moins un canal (Ca) dans lequel peut circuler un fluide de refroidissement/tempérage.

29. Procédé de fabrication de pièce monobloc selon la revendication 28, **caractérisé en ce que** la filière comporte plusieurs tronçons ($T_1$, $T_2$, $T_3$, $T_4$), au moins deux tronçons étant séparés par une plaque d'isolation thermique (Is).

30. Procédé de fabrication de pièce monobloc, selon l'une des revendications 26 à 29, **caractérisé en ce que** le ou les corps d'extrudeuse comprennent chacun deux vis co-rotatives.

31. Procédé de fabrication de pièce monobloc selon l'une des revendications 26 à 30, **caractérisé en ce qu'**il comprend :

- la fabrication en continu d'un ensemble constitué de bandes de matériau magnétocalorique, solidaires d'une embase ;
- une opération de découpe dudit ensemble de manière à définir des pièces élémentaires monobloc.

32. Procédé de fabrication de pièce monobloc selon l'une des revendications 26 à 31, **caractérisé en ce qu'**il comprend l'introduction de différents matériaux au travers de différents moyens d'alimentation répartis le long du ou des corps d'extrudeuse.

33. Procédé de fabrication de pièce monobloc selon la revendication 32, **caractérisé en ce qu'**il comprend l'introduction au travers d'un moyen d'alimentation, d'un liant organique de manière à fabriquer un matériau composite comprenant au moins une poudre de matériau magnétocalorique.

34. Procédé de fabrication de pièce monobloc selon l'une des revendications 32 à 33, **caractérisé en ce que** :

- ladite pièce monobloc étant constituée spatialement de différents matériaux ;
- le procédé comprend l'introduction de manière séquencée des différents matériaux magnétocaloriques de manière à fabriquer un ensemble de bandes continues présentant des séquences de matériaux magnétocaloriques différents, solidaire d'une embase ;
- la découpe de pièces monobloc unitaires dans ledit ensemble de bandes.

**Patentansprüche**

1. Einstückiges Teil, das wenigstens ein magnetokalorisches Material umfasst, das eine Legierung umfasst, die Eisen und Silicium und wenigstens ein Lanthanid umfasst, und das Folgendes umfasst:

- das Teil umfasst einen Sockel (E), der sich in einer ersten Ebene befindet, definiert durch eine erste Richtung (Dx) und durch eine zweite Richtung (Dy) und einen Satz von N einheitlichen Lamellen ($L_{a,i}$) einstückig mit dem Sockel (E);
- wobei die Lamellen eine erste Dimension ($D_{Lai,x}$) in der ersten Richtung ($D_x$), eine zweite Dimension ($D_{Lai,y}$) in der zweiten Richtung (Dy) und eine dritte Dimension ($D_{Lai,z}$) in einer dritten Richtung (Dz) lotrecht zur ersten und zweiten Dimension haben;
- wobei eine i-te Lamelle im Wesentlichen parallel zu und durch eine i-te Distanz ($d_i$) getrennt von einer (i+1)-ten Lamelle ist;
- wobei das Verhältnis zwischen der zweiten ($D_{Lai,y}$) und der ersten ($D_{Lai,x}$) Dimension gleich oder größer als 10 ist;
- wobei das Verhältnis zwischen der dritten Dimension ($D_{Lai,z}$) und der ersten Dimension ($D_{Lai,x}$) gleich oder größer als 6 ist;
- wobei die erste Dimension von derselben Größenordnung ist wie die Distanz ($d_i$), die eine i-te Lamelle ($L_{a,i}$) von einer (i+1)-ten Lamelle ($L_{a,i+1}$) trennt.

2. Einstückiges Teil nach Anspruch 1, **dadurch gekennzeichnet, dass** die erste Dimension zwischen etwa 0,1 mm und 0,8 mm ($0{,}1\,mm \leq D_{Lai,x} \leq 0{,}8\,mm$) beträgt.

3. Einstückiges Teil nach einem der Ansprüche 1 bis 2, **dadurch gekennzeichnet, dass** die zweite Dimension zwischen etwa 10 mm und 100 mm ($10\,mm \leq D_{Lai,y} \leq 100\,mm$) beträgt.

4. Einstückiges Teil nach einem der Ansprüche 1 bis 3, **dadurch gekennzeichnet, dass** die dritte Dimension zwischen etwa 6 mm und 25 mm (6 mm ≤ $D_{Lai,z}$ ≤ 25 mm) beträgt und in der Größenordnung von 12 mm liegen kann.

5. Einstückiges Teil nach einem der Ansprüche 1 bis 4, **dadurch gekennzeichnet, dass** die Distanz (di) zwischen einer i-ten Lamelle und einer (i+1)-ten Lamelle zwischen etwa 0,1 mm und 1 mm (0,1 ≤ $D_i$ ≤ 1 mm) beträgt.

6. Einstückiges Teil nach einem der Ansprüche 1 bis 5, **dadurch gekennzeichnet, dass** die Lamellen konvexe obere Flächen ($S_{La,i}$) aufweisen.

7. Einstückiges Teil nach einem der Ansprüche 1 bis 6, **dadurch gekennzeichnet, dass** der Sockel ausgehöhlte Flächen ($S_{Ci}$) zwischen einer i-ten Lamelle und einer (i+1)-ten Lamelle hat.

8. Einstückiges Teil nach Anspruch 7, **dadurch gekennzeichnet, dass** der Sockel konkave Flächen zwischen einer i-ten Lamelle und einer (i+1)-ten Lamelle hat.

9. Einstückiges Teil nach einem der Ansprüche 1 bis 8, **dadurch gekennzeichnet, dass** der Satz von Lamellen wenigstens eine Lamelle einer dritten Dimension hat, die sich von der der anderen Lamellen unterscheidet, so dass ein Markierungs- und/oder Positionierungselement für das einstückige Teil gebildet werden kann.

10. Einstückiges Teil nach einem der Ansprüche 1 bis 9, **dadurch gekennzeichnet, dass** der Sockel wenigstens eine Fläche zwischen einer i-ten Lamelle und einer (i+1)-ten Lamelle umfasst, die anders ausgehöhlt ist als die anderen ausgehöhlten Flächen, so dass ein Markierungs- und/oder Positionierungselement des einstückigen Teils gebildet werden kann.

11. Einstückiges Teil nach einem der Ansprüche 1 bis 10, **dadurch gekennzeichnet, dass** wenigstens ein Teilsatz von Lamellen wenigstens eine Protuberanz aufweist, die sich in der zweiten Richtung Dy erstreckt, wobei sich die Protuberanz zwischen dem Sockel und dem Ende der Lamelle gegenüber dem Sockel befindet, um den Raum zwischen zwei benachbarten Lamellen zu kalibrieren.

12. Einstückiges Teil nach einem der Ansprüche 1 bis 11, **dadurch gekennzeichnet, dass**:

 - das Verhältnis zwischen der Dimension in der dritten Richtung des Sockels ($D_{E,z}$) und der Dimension in der zweiten Richtung des Sockels ($D_{E,y}$) zwischen etwa 1/5 und 1/30 beträgt;
 - das Verhältnis zwischen der Dimension in der dritten Richtung des Sockels ($D_{E,z}$) und der dritten Dimension ($D_{Lai,z}$) in der Größenordnung von 1/20 liegt;
 - die erste Dimension ($D_{Lai,x}$) vorzugsweise im Wesentlichen gleich der Dimension in der dritten Richtung des Sockels ($D_{E,z}$) ist.

13. Einstückiges Teil nach einem der Ansprüche 1 bis 12, **dadurch gekennzeichnet, dass** der Sockel aus einem Sockelmaterial gebildet ist, die Lamellen aus wenigstens einem magnetokalorischen Material gebildet sind, wobei das Sockelmaterial und das magnetokalorische Material unterschiedlich sind.

14. Einstückiges Teil nach einem der Ansprüche 1 bis 13, **dadurch gekennzeichnet, dass** es wenigstens zwei Serien von Lamellen umfasst, die aus wenigstens zwei unterschiedlichen magnetokalorischen Materialien gebildet sind.

15. Einstückiges Teil nach einem der Ansprüche 1 bis 14, **dadurch gekennzeichnet, dass** wenigstens ein Teilsatz von Lamellen Regionen umfasst, die in der zweiten Richtung (Dy) verteilt sind, gebildet aus unterschiedlichen magnetokalorischen Materialien.

16. Einstückiges Teil nach einem der Ansprüche 1 bis 15, **dadurch gekennzeichnet, dass** wenigstens ein Teilsatz von Lamellen Regionen umfasst, die in der dritten Richtung (Dz) verteilt sind, gebildet aus unterschiedlichen magnetokalorischen Materialien.

17. Einstückiges Teil nach einem der Ansprüche 1 bis 16, **dadurch gekennzeichnet, dass** es Lamellen umfasst, die integrierte Kanäle ($CLi_{a,i}$) aufweisen, die am Sockel münden oder auch nicht.

18. Einstückiges Teil nach einem der Ansprüche 1 bis 17, **dadurch gekennzeichnet, dass** der Sockel wenigstens einen für die Passage eines Fluids bestimmten Kanal ($C_{EX,y}$) in der ersten Ebene umfasst.

19. Einstückiges Teil nach einem der Ansprüche 1 bis 18, **dadurch gekennzeichnet, dass** der Sockel periphere Teile ($E_{p1}$, $E_{p2}$) umfasst.

20. Einstückiges Teil nach einem der Ansprüche 1 bis 19, **dadurch gekennzeichnet, dass** wenigstens die erste Lamelle ($L_{a,1}$) oder die N-te Lamelle ($L_{a,N}$), die sich an der Peripherie des Sockels befindet, mit Bezug auf das Ende des Sockels in der ersten Ebene versetzt ist.

21. Einstückiges Teil nach einem der Ansprüche 1 bis 20, **dadurch gekennzeichnet, dass** es eine Konfiguration aufweist, die wenigstens teilweise entlang der zweiten Richtung gefaltet ist, die V-förmig sein kann.

**22.** Einstückiges Teil nach einem der Ansprüche 1 bis 21, **dadurch gekennzeichnet, dass** das magnetokalorische Material ein Verbundmaterial ist, das wenigstens ein Pulver aus magnetokalorischem Fe/Si/La-Material und ein organisches Bindemittel umfasst, wobei der Volumenanteil an magnetokalorischem Pulver zwischen 50 % und 90 % liegt.

**23.** Einstückiges Teil nach Anspruch 22, **dadurch gekennzeichnet, dass** das magnetokalorische Teil von der Familie (LaCe)(FeCoMn)H ist, wobei das Bindemittel zum Beispiel aus Polypropylen oder Polycarbonat oder Polyethylen sein kann.

**24.** Komplexes Teil, das zwei einstückige Teile nach einem der Ansprüche 1 bis 23 umfasst, wobei die beiden Teile ($P_1$, $P_2$) entgegengesetzt eingelassen sind, so dass der freie Raum zwischen Lamellen reduziert wird.

**25.** Komplexes Element, das zwei einstückige Teile nach Anspruch 24 umfasst, **dadurch gekennzeichnet, dass**:

- ein erstes Teil einen Satz von Lamellen umfasst, der wenigstens eine Lamelle der dritten Dimension umfasst, die größer ist als die der anderen Lamellen;
- ein zweites Teil einen Sockel umfasst, der genauso viele ausgehöhlte Flächen auf größeren Tiefen umfasst wie Lamellen der dritten Dimension, die größer ist als die der anderen Lamellen,
- wobei wenigstens eine Lamelle der dritten größeren Dimension des ersten Teils, eine komplementäre Form zu einer der ausgehöhlten Flächen auf einer größeren Tiefe des zweiten Teils hat.

**26.** Verfahren zur Herstellung eines einstückigen Teils nach einem der Ansprüche 1 bis 25, **dadurch gekennzeichnet, dass** es die folgenden Schritte beinhaltet:

- kontinuierliches Einleiten wenigstens eines magnetokalorischen Materialpulvers oder eines Gemischs aus wenigstens einem magnetokalorischen Pulver mit einem organischen Bindemittel in wenigstens einen Extruderkörper (Ex), der wenigstens eine Heizröhre (Fi) hat;
- Mischen, Homogenisieren und Fusionieren des magnetokalorischen Materialpulvers und ggf. des Bindemittels mit wenigstens einer Extrusionsschnecke (Vi), die sich in dem oder den Extruderkörper(n) befindet;
- Formen des Gemischs, das das magnetokalorische Material umfasst, durch wenigstens eine Extrusionsdüse (fil), ausgestattet mit wenigstens einem Abdruck, um ein einstückiges Teil nach einem der Ansprüche 1 bis 21 zu formen;
- wobei die wenigstens eine Düse die Struktur des einstückigen Teils definiert.

**27.** Verfahren zur Herstellung eines einstückigen Teils nach Anspruch 26, **dadurch gekennzeichnet, dass** es ferner einen Schritt des progressiven Kühlens im Raum am Ausgang der wenigstens einen Düse mittels dedizierter Mittel beinhaltet.

**28.** Verfahren zur Herstellung eines einstückigen Teils nach Anspruch 27, **dadurch gekennzeichnet, dass** die dedizierten Mittel eine Düse umfassen, die wenigstens einen Abschnitt umfasst, der mit wenigstens einem Kanal (Ca) ausgestattet ist, in dem Kühl-/Temperierungsfluid zirkulieren kann.

**29.** Verfahren zur Herstellung eines einstückigen Teils nach Anspruch 28, **dadurch gekennzeichnet, dass** die Düse mehrere Abschnitte ($T_1$, $T_2$, $T_3$, $T_4$) umfasst, wobei wenigstens zwei Abschnitte durch eine thermische Isolationsplatte (Is) getrennt sind.

**30.** Verfahren zur Herstellung eines einstückigen Teils nach einem der Ansprüche 26 bis 29, **dadurch gekennzeichnet, dass** der oder die Extruderkörper jeweils zwei corotierende Schnecken umfasst/umfassen.

**31.** Verfahren zur Herstellung eines einstückigen Teils nach einem der Ansprüche 26 bis 30, **dadurch gekennzeichnet, dass** es Folgendes beinhaltet:

- kontinuierliches Herstellen eines Satzes, gebildet aus magnetokalorischen Materialbahnen einstückig mit einem Sockel;
- einen Vorgang des Schneidens des Satzes zum Definieren einstückiger Elementarteile.

**32.** Verfahren zur Herstellung eines einstückigen Teils nach einem der Ansprüche 26 bis 31, **dadurch gekennzeichnet, dass** es das Einleiten von unterschiedlichen Materialien durch unterschiedliche, entlang des oder der Extruderkörper verteilte Zuführungsmittel beinhaltet.

**33.** Verfahren zur Herstellung eines einstückigen Teils nach Anspruch 32, **dadurch gekennzeichnet, dass** es das Einleiten, durch ein Zuführungsmittel, eines organischen Bindemittels beinhaltet, um ein Verbundmaterial herzustellen, das wenigstens ein magnetokalorisches Materialpulver umfasst.

**34.** Verfahren zur Herstellung eines einstückigen Teils nach einem der Ansprüche 32 bis 33, **dadurch gekennzeichnet, dass**:

- das einstückige Teil räumlich aus unterschiedlichen Materialien gebildet ist;
- das Verfahren das sequenzielle Einleiten von unterschiedlichen magnetokalorischen Materialien beinhaltet, um einen Satz von kontinuierlichen Bahnen herzustellen, die unterschiedliche mangetokalorische Materialsequenzen einstückig mit einem Sockel aufweisen;
- Schneiden von einheitlichen einstückigen Teilen aus dem Satz von Bahnen.

**Claims**

1. A one-piece part comprising at least one magnetocaloric material comprising an alloy that comprises iron and silicon and at least one lanthanide, and comprising:

   - said part comprising a base (E) located in a first plane defined by a first direction (Dx) and by a second direction (Dy) and a set of N unitary blades ($L_{a,i}$) rigidly connected to said base (E);
   - said blades having a first dimension ($D_{Lai,x}$) in the first direction ($D_x$), a second dimension ($D_{Lai,y}$) in the second direction (Dy) and a third dimension ($D_{Lai,z}$) in a third direction (Dz) perpendicular to the first and second dimensions;
   - an ith blade being substantially parallel to and separated from an (i+1)th blade by an ith distance ($d_i$);
   - the ratio between the second dimension ($D_{Lai,y}$) and the first dimension ($D_{Lai,x}$) being greater than or equal to 10;
   - the ratio between the third dimension ($D_{Lai,z}$) and the first dimension ($D_{Lai,x}$) being greater than or equal to 6;
   - the first dimension being of the same order of magnitude as said distance ($d_i$) separating an ith blade ($L_{a,i}$) from an (i+1)th blade ($L_{a,i+1}$).

2. The one-piece part as claimed in claim 1, **characterised in that** the first dimension is between approximately 0.1 mm and 0.8 mm ($0.1\ mm \leq D_{Lai,x} \leq 0.8\ mm$).

3. The one-piece part as claimed in any one of claims 1 to 2, **characterised in that** the second dimension is between approximately 10 mm and 100 mm ($10\ mm \leq D_{Lai,y} \leq 100\ mm$).

4. The one-piece part as claimed in any one of claims 1 to 3, **characterised in that** the third dimension is between approximately 6 mm and 25 mm ($6\ mm \leq D_{Lai,z} \leq 25\ mm$) and can be of the order of 12 mm.

5. The one-piece part as claimed in any one of claims 1 to 4, **characterised in that** the distance (di) between an ith blade and an (i+1)th blade is between approximately 0.1 mm and 1 mm ($0.1 \leq d_i \leq 1\ mm$).

6. The one-piece part as claimed in any one of claims 1 to 5, **characterised in that** the blades comprise convex upper surfaces ($S_{La,i}$).

7. The one-piece part as claimed in any one of claims 1 to 6, **characterised in that** said base comprises hollowed-out surfaces ($S_{Ci}$) between an ith blade and an (i+1)th blade.

8. The one-piece part as claimed in claim 7, **characterised in that** said base comprises concave surfaces between an ith blade and an (i+1)th blade.

9. The one-piece part as claimed in any one of claims 1 to 8, **characterised in that** the set of blades comprises at least one blade with a third dimension different from that of the other blades allowing the formation of a marking and/or positioning element of said one-piece part.

10. The one-piece part as claimed in any one of claims 1 to 9, **characterised in that** said base comprises at least one surface between an ith blade and an (i+1)th blade, hollowed-out differently from the other hollowed-out surfaces, allowing the formation of a marking and/or positioning element of said one-piece part.

11. The one-piece part as claimed in any one of claims 1 to 10, **characterised in that** at least one sub-set of blades has at least one protuberance extending in the second direction Dy, said protuberance being located between the base and the end of the blade opposite said base, so as to calibrate the space between two adjacent blades.

12. The one-piece part as claimed in any one of claims 1 to 11, **characterised in that**:

   - the ratio between the dimension in the third direction of the base ($D_{E,z}$) and the dimension in the second direction of the base ($D_{E,y}$) is between approximately 1/5 and 1/30;
   - the ratio between the dimension in the third direction of the base ($D_{E,z}$) and the third dimension ($D_{Lai,z}$) is of the order of 1/20;
   - the first dimension ($D_{Lai,x}$) being preferably substantially equal to the dimension in the third direction of the base ($D_{E,z}$).

13. The one-piece part as claimed in any one of claims 1 to 12, **characterised in that**, with the base being formed by a base material, the blades are formed by at least one magnetocaloric material, the base material and the magnetocaloric material being different.

**14.** The one-piece part as claimed in any one of claims 1 to 13, **characterised in that** it comprises at least two series of blades formed by at least two different magnetocaloric materials.

**15.** The one-piece part as claimed in any one of claims 1 to 14, **characterised in that** at least one sub-set of blades comprises regions distributed in the second direction (Dy) formed by different magnetocaloric materials.

**16.** The one-piece part as claimed in any one of claims 1 to 15, **characterised in that** at least one sub-set of blades comprises regions distributed in the third direction (Dz) formed by different magnetocaloric materials.

**17.** The one-piece part as claimed in any one of claims 1 to 16, **characterised in that** it comprises blades having integrated channels ($CLi_{a,i}$) emerging or not emerging at the base level.

**18.** The one-piece part as claimed in any one of claims 1 to 17, **characterised in that** the base comprises at least one channel ($C_{Ex,y}$) in said first plane, dedicated to the passage of a fluid.

**19.** The one-piece part as claimed in any one of claims 1 to 18, **characterised in that** the base comprises peripheral parts ($E_{p1}$, $E_{p2}$).

**20.** The one-piece part as claimed in any one of claims 1 to 19, **characterised in that** at least the $1^{st}$ blade ($L_{a,1}$) or the Nth blade ($L_{a,N}$), located at the periphery of the base, is offset relative to the end of said base, in said first plane.

**21.** The one-piece part as claimed in any one of claims 1 to 20, **characterised in that** it has a configuration that is at least partially folded in said second direction, which can be V-shaped.

**22.** The one-piece part as claimed in any one of claims 1 to 21, **characterised in that** the magnetocaloric material is a composite material comprising at least one powder of the magnetocaloric material Fe/Si/La and an organic binder, the magnetocaloric powder volumetric filler rate being between 50% and 90%.

**23.** The one-piece part as claimed in claim 22, **characterised in that** the magnetocaloric material is from the (LaCe)(FeCoMn)H family, the binder can be made, for example, of polypropylene or of polycarbonate or of polyethylene.

**24.** A complex part comprising two one-piece parts as claimed in any one of claims 1 to 23, said two parts ($P_1$, $P_2$) being embedded head-to-tail, allowing the free space between blades to be reduced.

**25.** The complex part comprising two one-piece parts as claimed in claim 24, **characterised in that**:

- a first part comprises a set of the blades comprising at least one blade with a third dimension greater than that of the other blades;
- a second part comprises a base comprising as many surfaces hollowed-out at greater depths as there are blades with a third dimension greater than that of the other blades;
- said at least one blade with a third dimension greater than the first part being of a shape complementing one of the surfaces hollowed-out at a greater depth of the second part.

**26.** A method for manufacturing a one-piece part as claimed in any one of claims 1 to 25, **characterised in that** it comprises the following steps:

- continuously introducing, into at least one extruder body (Ex) comprising at least one heating sheath (Fi), at least one powder of magnetocaloric material or a mixture of at least one magnetocaloric powder with an organic binder;
- mixing, homogenising and melting said powder of magnetocaloric material and, if appropriate, the binder, by at least one extrusion screw (Vi) located in the extruder body or bodies;
- shaping said mixture comprising said magnetocaloric material through at least one extrusion die (wire), equipped with at least one die cavity, allowing a one-piece part according to any one of claims 1 to 21 to be shaped;
- said at least one die defining the structure of said one-piece part.

**27.** The method for manufacturing a one-piece part as claimed in claim 26, **characterised in that** it further comprises a step of progressive cooling in the space, at the output of said at least one die, using dedicated means.

**28.** The method for manufacturing a one-piece part as claimed in claim 27, **characterised in that** the dedicated means comprise a die, comprising at least one section equipped with at least one channel (Ca), in which a cooling/tempering fluid can circulate.

**29.** The method for manufacturing a one-piece part as claimed in claim 28, **characterised in that** the die comprises a plurality of sections ($T_1$, $T_2$, $T_3$, $T_4$), at least two sections being separated by a thermal insulation plate (Is).

**30.** The method for manufacturing a one-piece part as claimed in any one of claims 26 to 29, **characterised**

**in that** the extruder body or bodies each comprise two co-rotating screws.

31. The method for manufacturing a one-piece part as claimed in any one of claims 26 to 30, **characterised in that** it comprises:

> - continuously manufacturing a set formed by strips of magnetocaloric material, rigidly connected to a base;
> - an operation of cutting said set so as to define individual one-piece parts.

32. The method for manufacturing a one-piece part as claimed in any one of claims 26 to 31, **characterised in that** it comprises introducing different materials through different supply means distributed along the extruder body or bodies.

33. The method for manufacturing a one-piece part as claimed in claim 32, **characterised in that** it comprises introducing, through a supply means, an organic binder so as to manufacture a composite material comprising at least one powder of magnetocaloric material.

34. The method for manufacturing a one-piece part as claimed in any one of claims 32 to 33, **characterised in that**:

> - said one-piece part is spatially formed by different materials;
> - the method comprises sequentially introducing the different magnetocaloric materials so as to manufacture a set of continuous strips exhibiting sequences of different magnetocaloric materials, rigidly connected to a base;
> - cutting unitary one-piece parts from said set of strips.

EP 2 880 377 B1

FIG.1

17

FIG.2

$L_{a,i}$

$CLi_{a,i}$

FIG.3

$E_{p1}$    E    $E_{p2}$

FIG.4

FIG.5

FIG.6a

$L_{a1,i}$

$L_{a2,i}$

FIG.6b

$L_{a1,i}$

$L_{a2,i}$

FIG.6c

FIG.7a

$L_{a2,i}$

$L_{a1,i}$

FIG.7b

$L_{a1,i}$

$L_{a2,i}$

FIG.7c

FIG.8

FIG.9

FIG.10

$L_{a,i}$

$M_{cal}$

$M_E$

E

## FIG.11

FIG.12

FIG.13

FIG.14

FIG.15

EP 2 880 377 B1

FIG.16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012056585 A1

- WO 2006074790 A